# EUROPÄISCHE PATENTSCHRIFT

(11) **EP 1 341 652 B1**
(45) Veröffentlichungstag und Bekanntmachung des Hinweises auf die Patenterteilung: **01.02.2006**
(21) Anmeldenummer: 01270413.6
(22) Anmeldetag: 24.10.2001
(51) Int. Cl.: B29B 9/06

(54) **TRENNEINRICHTUNG FÜR UNTERWASSERGRANULATOREN**
SEPARATION DEVICE FOR UNDERWATER PELLETIZERS
DISPOSITIF DE SEPARATION POUR GRANULATEURS SOUS L'EAU

(30) Priorität: 13.12.2000 DE 10062113
(43) Veröffentlichungstag der Anmeldung: 10.09.2003
(73) Patentinhaber: BKG Bruckmann & Kreyenborg Granuliertechnik GmbH, 48157 Münster (DE)
(72) Erfinder: WESSLING, Christopher, 48145 Münster (DE)
(74) Vertreter: Habbel, Hans-Georg
(86) Internationale Anmeldenummer: PCT/DE2001/004059
(87) Internationale Veröffentlichungsnummer: WO 2002/047879

(56) Entgegenhaltungen:
- DE-A- 2 215 841
- DE-A- 19 855 617
- DE-A1- 19 642 389
- US-A- 4 874 307
- US-A- 5 009 586

## Beschreibung

Die Erfindung bezieht sich auf eine Trenneinrichtung für Unterwassergranulatoren gemäß dem Oberbegriff des Hauptanspruches.

Unterwassergranulatoren weisen ein Einlaßgehäuse mit einem Einlaßkanal zur Aufnahme einer Polymerschmelze auf, wobei die Polymerschmelze durch einen Kegelvorsprung nach außen abgelenkt in eine Vielzahl von Extrusionsöffnungen in einem Düsenteller strömt, der einen Abschlagkopf aufweist, der aus verschleißfestem Werkstoff besteht. An dem Düsenteller ist eine Schneidkammer vorgesehen, die einen Einlaßkanal für das Umlaufwasser und einen Ablaßkanal für das Wasser und die erzeugten Pellets aufweist. Durch die Schneidkammer verläuft eine Antriebswelle und hält und treibt einen Trennkörperhalter.

Im Stand der Technik, beispielsweise gemäß der DE 196 42 389 A1 trägt der Trennkörperhalter eine Vielzahl von Schneidmesser, deren Klingen mit dem Abschlagkopf und der Austrittsstelle der Düsen zusammenwirkt. Die Schneidmesser sind dabei an ihren in Umlaufrichtung gesehen vorderen Kanten als scharfe Messer ausgebildet, stehen in einem Winkel von etwa 45° zum Abschlagkopf, wobei in den die Schneidmesser tragenden Armen des Trennkörperhalters entsprechend schräge Aufnahmeeinschnitte vorgesehen sind. Die Festlegung der Schneidmesser in den Armen des Trennkörperhalters erfolgt im Stand der Technik durch Schrauben od. dgl.

Durch die schräge, d. h. stark geneigte Anordnung der Schneidmesser ist die Anzahl der Messer eingeschränkt.

Durch die schräge Ausrichtung der Messer im Stand der Technik kommt es aufgrund der Rotation im Wasser immer wieder vor, daß aufgrund der Ansaugwirkung des Messerkopfes ein Selbstandrücken der Messer eintritt.

Der Aufwand zum Anschleifen der Messer ist hoch und die scharfe Messerschneide bedeutet bei jeder Reparatur die Gefahr von erheblichen Schnittverletzungen.

In der DE 198 55 617 A1 wird eine Granuliervorrichtung mit Schneidrotor beschrieben. Bei dieser Einrichtung sind in einem Rotorkörper von der Rotormantelfläche ausgehend parallel zur Rotorachse ausgerichtete Nuten ausgearbeitet, wobei jede Nut jeweils ein Schneidmesser aufnimmt, das vorzugsweise aus Hartmetall besteht. Das Schneidmesser wird über ein Klemmelement festgelegt, das als geschlitzte Spannhülse ausgebildet ist, deren zylindrische Außenkontur mit einer entsprechenden Aussparung in dem Schneidmesser konform ist. Durch den Einsatz der Klemmelemente ist einerseits eine geometrische Ungenauigkeit verbunden und außerdem können solche Klemmelemente zu unvorhergesehenen Unwuchten führen und sich auch lösen.

Auch bei dieser Einrichtung ist der Aufwand zum Anschleifen der Messer hoch und die scharfe Messerschneide bedeutet bei jeder Reparatur die Gefahr von erheblichen Schnittverletzungen.

Der Erfindung liegt die Aufgabe zugrunde, die gattungsbildende Einrichtung gemäß der DE 198 55 617 A1 dahingehend zu verbessern, daß der Aufwand für die Herstellung der Trennkörper vermieden wird, die Verletzungsgefahr eingeschränkt wird und eine spurtreue Führung der Trennkörper erreichbar ist.

Diese der Erfindung zugrundeliegende Aufgabe wird durch die Lehre des Hauptanspruches gelöst.

Vorteilhafte Ausgestaltungen der Erfindung sind in den Unteransprüchen erläutert.

Mit anderen Worten ausgedrückt werden anstelle der im Stand der Technik eingesetzten, geschliffenen Messer einfache Trennkörper vorgesehen, die als rechteckige Schlagleisten, die die Gestalt einer Latte in Form eines Quaders aufweisen, ausgebildet sind, wobei diese rechteckigen Trennkörper in den Einschnitten des Trennkörperhalters so angeordnet werden, daß die Bodenfläche jedes Einschnittes etwa parallel zur Achse der Antriebswelle verläuft.

Die Trennkörper stellen also keine Messer mehr dar, sondern Schläger oder Schlagleisten. Allein hieraus ist ersichtlich, daß der Aufwand zur Herstellung dieser Trennkörper wesentlich geringer ist als der Aufwand zur Herstellung der im Stand der Technik eingesetzten Messer. Aufgrund der Ausrichtung der Trennkörper können mehr Trennkörper auf einem Trennkörperhalter eingesetzt werden als dies bisher im Stand der Technik (DE 196 42 389) möglich war. Die Trennkörperauflagefläche ist geringer bei gleicher Stabilität und die Trennkörper laufen immer spurtreu.

Ein Selbstandrücken aufgrund der Ansaugwirkung des Messerkopfes gemäß der DE 196 42 389, wie es aufgrund der Rotation der schrägen Messer im Wasser immer wieder vorkommt, ist bei den erfindungsgemäß vorgesehenen Schlagleisten nicht mehr möglich, d. h. es wird eine sicherere Führung des Trennkörperhalters erreicht.

Die Trennkörper können sich in axialer Richtung nicht durchbiegen und federn.

Weiterhin ist vorgesehen, daß gegenüber dem Stand der Technik der eigentliche Trennkörperhalter mit Durchbrechungen versehen ist, die ein einwandfreies Abführen der von den Schlagleisten losgelösten Pellets ermöglicht.

Gemäß einem weiteren Merkmal der Erfindung können die Schlagleisten oder Trennkörper an ihrer zum Abschlagkopf hin gerichteten Seite leicht angefast sein, um dadurch bei den ersten Umläufen der Schlagleiste und deren Berührung mit dem Abschlagkopf ein genaues, gleiches Anliegen der Schlagleisten am Abschlagkopf zu erreichen. Da die Schlagleisten mittels Schrauben in den Einschnitten der Arme des Trennkörperhalters festgelegt werden, sind geringfügige Unterschiede im Überstand der Schlagleisten gegenüber der Ebene des Trennkörperhalters möglich, was durch die ersten Umlaufbewegungen des Trennkörperhalters bei Berührung der Schlagleisten mit dem Abschlagkopf ausgeglichen wird.

Ein Ausführungsbeispiel der Erfindung wird nachfolgend anhand der Zeichnungen erläutert. Die Zeichnungen zeigen dabei in
- Fig. 1: schaubildlich einen Trennkörperhalter mit eingesetzten Trennkörpern, in
- Fig. 2: eine zeichnerische Ansicht des Trennkörperhalters und in
- Fig. 3: eine Einzeldarstellung eines Trennkörpers.

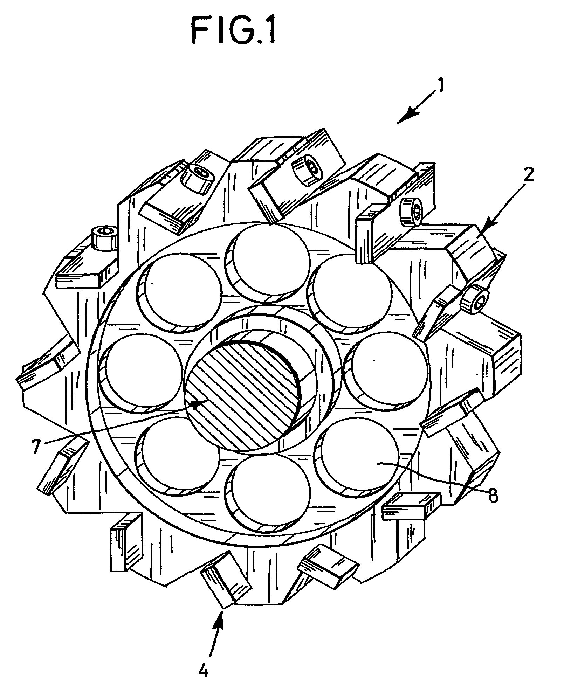

In Fig. 1 ist ein Trennkörperhalter 1 dargestellt, der von einer Antriebswelle 7 getragen und angetrieben wird. Der Trennkörperhalter 1 weist radial ausgerichtete Arme 2 auf, in denen Einschnitte 3 vorgesehen sind, in die Trennkörper 4 eingesetzt werden, die innerhalb der Einschnitte 3 über Schrauben 5 od. dgl. festgelegt werden.

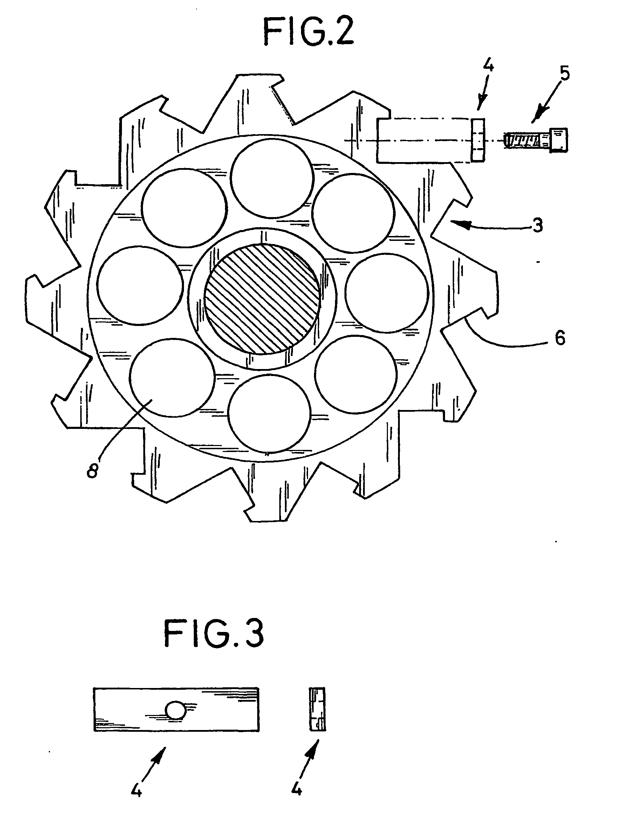

In Fig. 3 ist in Ansicht und in Seitenansicht ein Trennkörper 4 dargestellt, und es ist erkennbar, daß es sich dabei um eine einfache Schlagleiste handelt, also nicht um ein angeschliffenes oder angespitztes Messer.

Die Bodenfläche 6 (Fig. 2) jedes Einschnittes 3 ist im wesentlichen parallel zur Achse der Antriebswelle 7 ausgerichtet, so daß jede wesentliche Neigung des Trennkörpers 4 gegenüber dieser Antriebswelle 7 vermieden wird. Als maximale Neigung des Trennkörpers 4 gegenüber der Antriebswelle 7 wird ein Winkel von bis zu 10° nicht überschritten.

Um ein gutes Abtransportieren der erzeugten Pellets zu erreichen, ist der Trennkörperhalter 1 mit Durchbrechungen 8 versehen.

## Patentansprüche

1. Trenneinrichtung für Unterwassergranulatoren mit einem auf einer Antriebswelle(7) angeordneten und mit einem Abschlagkopf zusammenwirkenden Trennkörperhalter (1) mit einer Vielzahl sich radial erstreckender Arme (2), die je einen Einschnitt (3) zur Aufnahme und Halterung eines Trennkörpers (4) aufweisen, wobei die Bodenfläche (6) jedes Einschnittes (3) im wesentlichen parallel zur Achse der Antriebswelle (7) verläuft und ein Winkel von 10° zwischen der Bodenfläche (6) jedes Einschnittes (3) und der Achse der Antriebswelle (7) nicht überschritten wird, **dadurch gekennzeichnet, daß** die Trennkörper (4) als rechteckige Schlagleisten ausgebildet sind.

2. Trenneinrichtung nach Anspruch 1, **dadurch gekennzeichnet, daß** der Trennkörper (4) mittels einer oder mehreren Schrauben im Einschnitt (3) auswechselbar befestigt ist.

3. Trenneinrichtung nach Anspruch 1, **dadurch gekennzeichnet, daß** der Trennkörperhalter (1) mit Durchbrechungen (8) versehen ist.

4. Trenneinrichtung nach Anspruch 1 oder 2, **dadurch gekennzeichnet, daß** die Schlagleisten in Richtung auf den Abschlagkopf an einer Kante angefast sind.

## Claims

1. Separation device for underwater granulators, having a separating body holder (1) arranged on a drive shaft (7) and cooperating with a chopping head, said separating body holder having a plurality of radially extending arms (2), each of which has a recess (3) for accommodating and holding a separating body (4), whereby the base surface (6) of each recess (3) runs substantially parallel to the axis of the drive shaft (7) and the angle between the base surface (6) of each recess (3) and the axis of the drive shaft (7) does not exceed 10°, **characterised in that** the separating bodies (4) are designed as rectangular impact bars.

2. Separation device according to claim 1, **characterised in that** the separating body (4) is replaceably attached by means of one or more screws in the recess (3).

3. Separation device according to claim 1, **characterised in that** the separating body holder (1) is provided with perforations (8).

4. Separation device according to claim 1 or 2, **characterised in that** the impact bars are bevelled on one edge in the direction towards the chopping head.

## Revendications

1. Dispositif de découpe pour des granulateurs sous eau avec un support d'éléments de découpe (1) disposé sur un arbre d'entraînement (7) et coopérant avec une tête de percussion, doté d'une pluralité de bras (2) s'étendant dans le sens radial qui possèdent chacun une échancrure (3) pour recevoir et retenir un élément de découpe (4), la surface de fond (6) de chaque échancrure (3) étant sensiblement parallèle à l'axe de l'arbre d'entraînement (7) et un angle de 10° entre la surface de fond (6) de chaque échancrure (3) et l'axe de l'arbre d'entraînement (7) n'étant pas dépassé, **caractérisé en ce que** les éléments de découpe (4) sont conçus comme des bandes de percussion rectangulaires.

2. Dispositif de découpe selon la revendication 1, **caractérisé en ce que** les éléments de découpe (4) sont fixés de manière interchangeable dans l'échancrure (3) au moyen d'une ou plusieurs vis.

3. Dispositif de découpe selon la revendication 1, **caractérisé en ce que** le support d'éléments de découpe (1) est pourvu de perforations (8).

4. Dispositif se découpe selon la revendication 1 ou 2, **caractérisé en ce que** les bandes de percussion sont biseautées sur un bord en direction de la tête de percussion.
